# FASCICULE DE BREVET EUROPEEN

(11) **EP 3 769 979 B1**
(45) Date de publication et mention de la délivrance du brevet: **23.02.2022**
(21) Numéro de dépôt: 20187781.8
(22) Date de dépôt: 24.07.2020
(51) Int. Cl.: B60D 1/32, B60D 1/44, B60D 1/48, B60D 1/50

(54) **ENSEMBLE D'ARTICULATION D'ATTELAGE INTEGRANT UN SYSTEME D'AMORTISSEMENT**
KUPPLUNGSGELENKANORDNUNG, DIE EIN STOSSDÄMPFUNGSSYSTEM UMFASST
JOINT ASSEMBLY FOR LINKAGE INCLUDING A DAMPING SYSTEM

(30) Priorité: 26.07.2019 FR 1908528
(43) Date de publication de la demande: 27.01.2021
(73) Titulaire: Lohr Industrie, 67980 Hangenbieten (FR)
(72) Inventeur: MOREL, Hervé, 67540 OSTWALD (FR); ANDRE, Jean-Luc, 67120 MOLSHEIM (FR)
(74) Mandataire: Merckling, Norbert

(56) Documents cités:
- EP-A1- 0 022 674
- EP-A1- 0 181 606
- EP-A1- 0 298 401
- FR-A2- 2 312 685
- FR-A5- 2 223 975
- US-A- 5 671 937
- US-A1- 2006 138 746

## Description

### Domaine technique

La présente invention se rapporte au domaine technique général des ensembles routiers comprenant notamment un véhicule tracteur et au moins une remorque. Il s'agit à titre d'exemple d'un camion tractant une ou plusieurs remorques.

L'invention concerne plus généralement un ensemble d'articulation d'attelage associé ou comportant un système d'amortissement notamment des mouvements en lacet d'une remorque tractée. Il convient en effet de limiter les amplitudes des mouvements en lacet d'une remorque pour éviter par exemple dans des configurations de descente, le renversement ou sa mise en portefeuille à partir de certaines vitesses. De tels risques augmentent par exemple lors de manœuvres brutales de déviation de cap, en particulier lors d'un évitement, ou en cas de mauvaise répartition des charges sur l'ensemble routier.

### Technique antérieure

Il est connu d'associer une articulation d'attelage à un dispositif d'amortissement des mouvements en lacet d'une remorque d'un ensemble routier, comprenant un véhicule tracteur et au moins une remorque tractée par ledit véhicule tracteur. Le document FR 2 312 685 A2 divulgue un ensemble d'articulation selon le préambule de la revendication 1.

On connait ainsi, par exemple par l'intermédiaire du document EP 1 200 276 B1, un dispositif d'amortissement comprenant une piste curviligne, distincte de l'attelage et de structures de frottement forcées contre ladite piste par l'intermédiaire d'un actionneur pour absorber l'énergie par frottement sur la piste et amortir ainsi les mouvements en lacet de la remorque. Une tel dispositif, malgré son efficacité, rend les opérations de dételage de la remorque au niveau de l'articulation d'attelage, longues et compliquées sans risquer d'affecter l'intégrité du dispositif d'amortissement et par conséquent son efficacité ultérieure après un nouvel attelage à un véhicule tracteur. La piste de frottement est en outre exposée à l'humidité et à la pollution, ce qui peut altérer le frottement obtenu avec les structures de frottement.

L'objet de la présente invention vise par conséquent à pallier les inconvénients de l'art antérieur et à fournir un nouvel ensemble d'articulation d'attelage pour un ensemble routier formé d'un véhicule tracteur et d'au moins une remorque.

Un autre objet de la présente invention vise à proposer un nouvel ensemble d'articulation d'attelage intégrant un système d'amortissement.

Un autre objet de la présente invention vise à proposer un nouvel ensemble d'articulation d'attelage dont la conception rend les opérations d'attelage et de dételage simples et rapides.

Un autre objet de la présente invention vise à proposer un nouvel ensemble d'articulation d'attelage dont l'intégrité et l'efficacité du système d'amortissement ne risquent pas d'être altérées par les opérations d'attelage te de dételage successifs.

### Présentation de l'invention

Les objets assignés à la présente invention sont atteints à l'aide d'un ensemble d'articulation d'attelage pour un ensemble routier comprenant un véhicule tracteur et au moins une remorque attelée au dit véhicule tracteur, une articulation mécanique, autorisant des rotations selon au moins un axe vertical, entre une extrémité avant de la remorque et le véhicule tracteur et un système d'amortissement pour amortir au moins les mouvements en lacet de la remorque, ledit ensemble d'articulation d'attelage comportant une pièce d'attelage remorque destinée à être fixée à l'extrémité avant, une pièce d'attelage tracteur destinée à être fixée à un châssis du véhicule tracteur, ladite pièce d'attelage tracteur comportant l'articulation mécanique et le système d'amortissement, l'articulation mécanique comportant un réceptacle à empreinte dans lequel est logé et retenu l'embout d'articulation de manière à réaliser un liaison mécanique articulée au moins autour d'un axe vertical, ladite articulation mécanique intégrant le système d'amortissement.

L'axe vertical doit être compris au sens large, c'est-à-dire un axe orthogonal à la surface de roulement. L'ensemble routier peut par exemple circuler sur une route en dévers et les mouvements en lacet s'effectue alors selon un axe incliné par rapport à la direction verticale.

Selon la présente invention le réceptacle à empreinte comprend deux calottes concaves agencées en vis-à-vis et venant enserrer l'embout d'articulation tout en autorisant des mouvements de rotation mutuels selon au moins un axe vertical, pour exercer une précontrainte sur ledit embout d'articulation.

Selon un exemple de réalisation, le système d'amortissement comprend une coupelle composite en matériau de frottement disposée à l'interface de chaque calotte et de l'embout d'articulation.

Selon un exemple de réalisation, les calottes, les coupelles composites et l'embout d'articulation, sont traversés par un arbre de tension reliant les calottes sphériques pour maintenir les calottes en rapprochement et exercer une précontrainte sur les coupelles composites en appui sur l'embout d'articulation.

Selon un exemple de réalisation, l'arbre de tension prend appui sur au moins une des calottes par l'intermédiaire de rondelles de compression du genre rondelles Belleville.

Selon un exemple de réalisation, chaque coupelle composite comprend un insert extérieur dont une face extérieure épouse la forme interne de la calotte et dont une face intérieure de forme sensiblement concave présente des ailettes radiales en relief, et un insert intérieur dont une face extérieure épouse la forme de l'embout d'articulation et dont une face intérieure de forme sensiblement convexe présente des ailettes radiales en relief et en vis-à-vis des ailettes radiales de l'insert extérieur.

Selon un exemple de réalisation, les calottes concaves et l'embout d'articulation présentent au moins partiellement une forme sphérique constituant ainsi une articulation à trois axes.

Selon un exemple de réalisation, les inserts extérieur et intérieur sont assemblés, selon leur axe de révolution R, en quinconce au niveau de leurs ailettes radiales et les espaces localisés entre les ailettes radiales sont comblés avec un élastomère.

A titre d'exemple, les inserts extérieur et intérieur sont réalisés avec un matériau de frottement d'une famille comprenant un matériau polyamide, un matériau thermoplastique, un matériau polyéthylène, chargé ou non chargé, un matériau plastique de frottement, un matériau composite de frottement, un alliage métallique de frottement et un matériau fritté de frottement.
du genre polyamide, thermoplastique ou polyéthylène. L'élastomère est de préférence contraint en compression sur l'embout d'articulation lors d'un mouvement en lacet.

Selon un exemple de réalisation, l'articulation mécanique est indémontable ou inséparable à des fins de détalage de la remorque, un point d'attelage formé par l'interface de la pièce d'attelage remorque et de la pièce d'attelage tracteur étant décalé de l'articulation mécanique, en direction de la remorque.

Selon un exemple de réalisation, la pièce d'attelage remorque est une plaque rigide d'attelage pourvue de perçages destinés à être traversés par des boulons de fixation pour solidariser ladite plaque rigide d'attelage à l'extrémité avant.

Selon un exemple de réalisation, la pièce d'attelage tracteur comporte une plaque rigide arrière pourvue de perçages destinés à être traversés par des boulons de fixation pour solidariser ladite plaque rigide arrière à la plaque rigide d'attelage de la remorque et constituer ainsi le point d'attelage distant de l'articulation trois axes.

Selon un exemple de réalisation, la pièce rigide arrière se prolonge par l'intermédiaire d'une partie de liaison avec un embout d'articulation pour constituer une partie de l'articulation trois axes.

Selon un exemple de réalisation, la pièce d'attelage tracteur comporte une plaque rigide avant pourvue de perçages destinés à être traversés par des boulons de fixation pour solidariser ladite plaque rigide avant au châssis du véhicule tracteur.

Les objets assignés à l'invention sont également atteints à l'aide d'un ensemble routier comprenant un véhicule tracteur et au moins une remorque attelée au véhicule tracteur par l'intermédiaire d'un ensemble d'articulation d'attelage tel que présenté cidessus.

L'ensemble d'articulation d'attelage conforme à l'invention présente l'énorme avantage d'augmenter l'espace de chargement d'une remorque. En effet, le point d'attelage étant déporté, la partie avant de la remorque présente une longueur diminuée d'environ 300 mm. Ceci permet d'augmenter la longueur de chargement dans la même proportion sans augmenter la longueur globale de la remorque. Ceci est lié au fait que la mesure de la longueur d'une remorque, limitée par exemple à 12 m, s'effectue depuis le point d'attelage. Dans la mesure où le point d'attelage est reculé par rapport à l'articulation de l'attelage, on augmente ainsi la longueur utile de la remorque.

Un autre avantage de l'ensemble d'articulation d'attelage conforme à l'invention, réside dans la position du point d'attelage lequel est décalé vers l'arrière et se trouve donc plus accessible pour les opérations d'attelage et de dételage de la remorque.

Un autre avantage de l'ensemble d'articulation d'attelage conforme à l'invention réside dans l'intégration du système d'amortissement réduisant ainsi l'encombrement de l'ensemble d'articulation d'attelage et améliorant sa tenue mécanique. Le système d'amortissement n'est ni accessible directement lors des opérations d'attelage/dételage, ni exposé à la poussière ou à l'humidité.

Un autre avantage de l'ensemble d'articulation d'attelage conforme à l'invention réside dans la simplification et la diminution des opérations de maintenance dans la mesure où l'articulation trois axes de l'ensemble d'articulation d'attelage n'est pas démontable à des fins d'attelage ou de dételage.

Un autre avantage de l'invention réside dans une certaine souplesse de l'élastomère intégré dans les coupelles, lequel présente pour des petits débattements en tangage et en roulis, un cisaillement et non un frottement desdites coupelles. On réduit ainsi l'usure liée au frottement.

### Brève description des figures

D'autres caractéristiques et avantages de la présente invention apparaîtront plus clairement à la lecture de la description qui va suivre, faite en référence aux dessins annexés, donnés à titre d'exemples non limitatifs, dans lesquels :
- La figure 1 est une illustration schématique d'un ensemble routier comprenant une remorque attelée à un camion et comportant un ensemble d'articulation d'attelage conforme à l'invention,
- La figure 2 est une illustration schématique de l'ensemble routier de la figure 1, avec une remorque dételée,
- La figure 3 est une illustration de la remorque des figures 1 et 2,
- Les figures 4 et 5 représentent respectivement l'ensemble d'articulation d'attelage conforme à l'invention, dans un état attelé et dételé,
- La figure 6 est une représentation en perspective d'un exemple de réalisation d'un ensemble d'articulation d'attelage conforme à l'invention,
- La figure 7 est une représentation agrandie, en vue de profil de l'ensemble d'articulation d'attelage de la figure 6,
- La figure 8 est une représentation en perspective d'une pièce d'attelage tracteur de l'ensemble d'articulation d'attelage conforme à l'invention, fixée au véhicule tracteur,
- La figure 9 est une représentation en perspective d'une pièce d'attelage remorque de l'ensemble d'articulation d'attelage conforme à l'invention, fixée à l'extrémité avant de la remorque,
- La figure 10 est une représentation en coupe de la pièce d'attelage tracteur de l'ensemble d'articulation d'attelage conforme à l'invention,
- La figure 11 illustre, selon une vue en perspective, une partie sous forme de coupelle d'un système d'amortissement de l'ensemble d'articulation d'attelage conforme à l'invention,
- Les figures 12 et 13 illustrent des détails de réalisation d'une partie du système d'amortissement de l'ensemble d'articulation d'attelage conforme à l'invention,
- La figure 14 illustre selon une vue en coupe, la coupelle de la figure 11,
- La figure 15 illustre selon une vue en éclaté, la coupelle de la figure 11,
- La figure 16 illustre selon une vue en coupe et en perspective, un autre mode de réalisation de la pièce d'attelage tracteur de l'ensemble d'articulation d'attelage conforme à l'invention,
- La figure 17 illustre selon une vue de profil, un autre mode de réalisation de la pièce d'attelage tracteur de l'ensemble d'articulation d'attelage conforme à l'invention,
- La figure 18 est une vue en coupe et en perspective de la pièce d'attelage de la figure 17, et
- La figure 19 est une vue en perspective de la pièce d'attelage tracteur des figures 17 et 18, fixée sur un exemple de réalisation d'une pièce d'attelage remorque.

### Description détaillée de l'invention

Dans la suite, les éléments représentés sur plusieurs figures, lesquels sont structurellement et fonctionnellement identiques, comportent les mêmes références numériques ou alphanumériques.

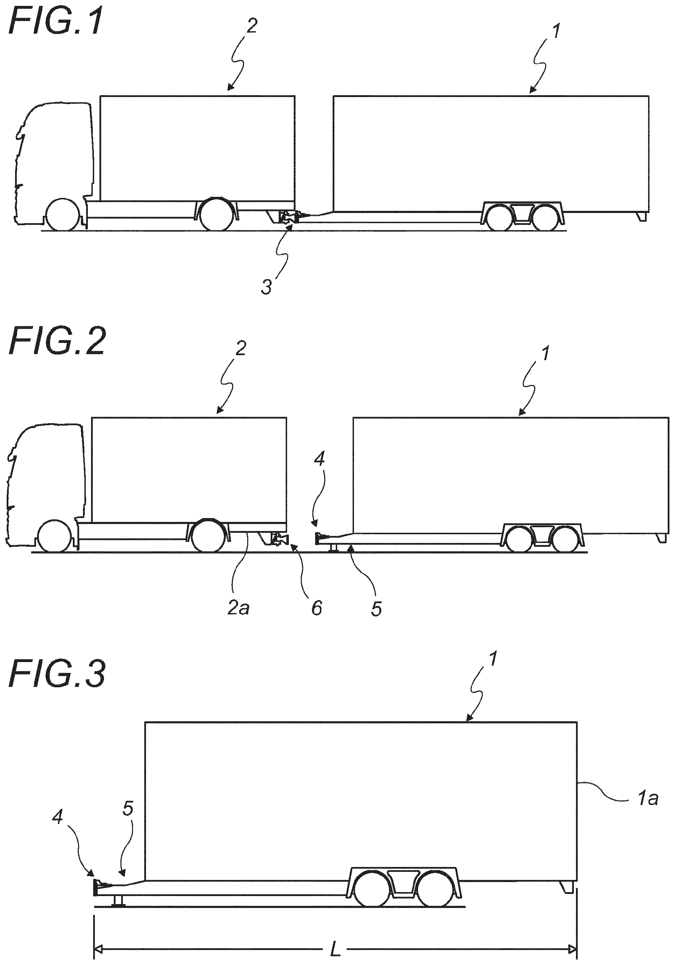

La figure 1 est une illustration schématique d'un ensemble routier comprenant une remorque 1 attelée à un véhicule tracteur 2 par l'intermédiaire d'un ensemble d'articulation d'attelage 3 conforme à l'invention. D'autres configurations d'attelage peuvent également être envisagées dans le cadre de la présente invention.

La figure 2 illustre l'ensemble routier de la figure 1 avec la remorque 1 dételée du véhicule tracteur 2. L'ensemble d'articulation d'attelage 3 comprend une pièce d'attelage remorque 4, fixée à extrémité avant 5 du châssis de la remorque 1.

L'ensemble d'articulation d'attelage 3 comprend également une pièce d'attelage tracteur 6 fixée sur un châssis 2a du véhicule tracteur 2.

La figure 3 est une illustration agrandie de la remorque 1, laquelle présente une longueur L. Cette longueur L de la remorque 1 s'étend ainsi de l'extrémité arrière la de ladite remorque 1 à l'extrémité avant constitué par la pièce d'attelage remorque 4. L'interface de la pièce d'attelage remorque 4 et de la pièce d'attelage tracteur 6 constitue par conséquent le point d'attelage de l'ensemble routier. Les opérations d'attelage et de dételage sont effectuées de préférence en atelier de maintenance.

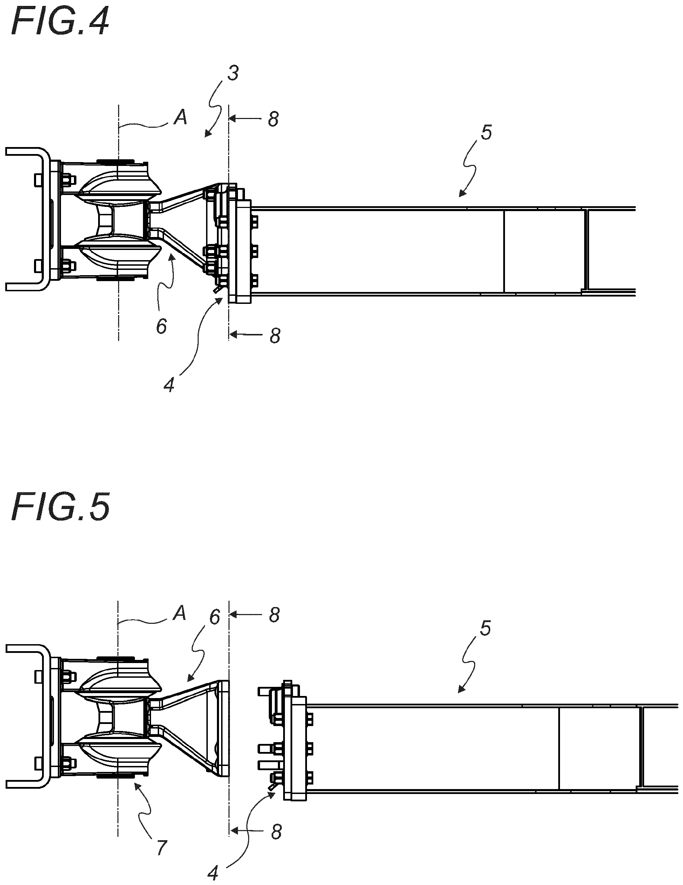

Les figures 4 et 5 représentent respectivement un exemple de réalisation de l'ensemble d'articulation d'attelage 3, respectivement dans un état attelé et dans un état dételé.

La pièce d'attelage tracteur 6 comporte préférentiellement une articulation trois axes 7 avec une axe d'articulation vertical A et un système d'amortissement. Ce dernier est avantageusement intégré à l'articulation trois axes 7.

Selon un autre mode de réalisation, la pièce d'attelage comporte une articulation à un axe, à savoir l'axe d'articulation vertical A avec le système d'amortissement en lacet. Les articulations en roulis et en tangage sont alors localisées, à titre d'exemple, au niveau de la fixation sur le véhicule tracteur 2.

Avantageusement l'articulation trois axes 7 est indémontable ou inséparable à des fins de dételage de la remorque 1. L'ensemble d'articulation d'attelage 3 présente à cet effet un point d'attelage 8 localisé à l'interface de la pièce d'attelage remorque 4 et de la pièce d'attelage tracteur 6. Le point d'attelage 8 est par conséquent décalé de l'articulation trois axes 7 en direction de la remorque 1.

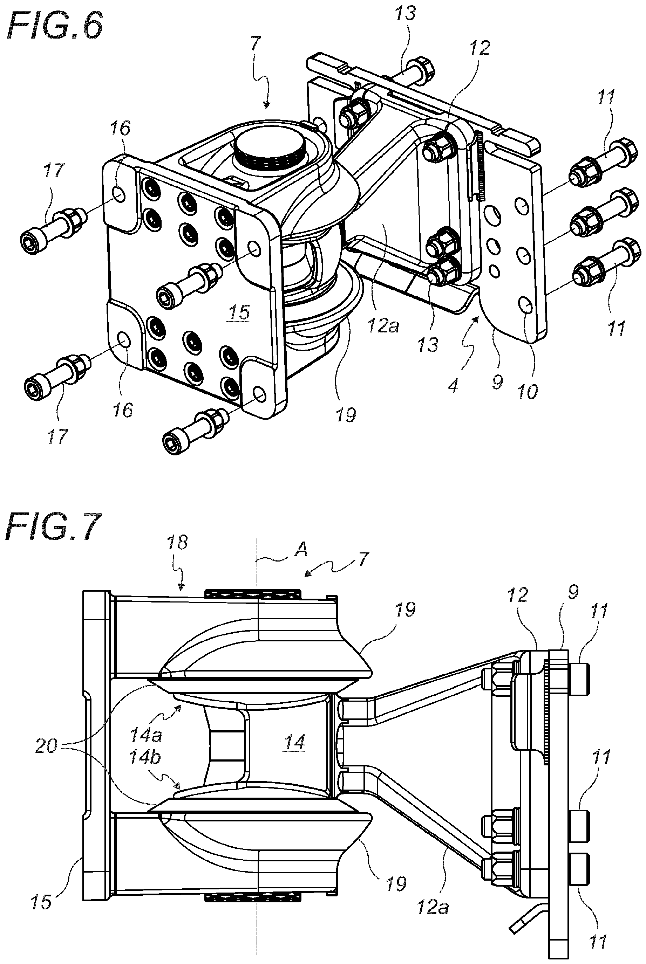

La figure 6 est une représentation en perspective d'un exemple de réalisation d'un ensemble d'articulation d'attelage 3. Dans cet exemple de réalisation, la pièce d'attelage remorque 4 comporte une plaque rigide d'attelage 9 pourvue de perçages 10 destinés à être traversé par des boulons de fixation 11 pour solidariser ladite plaque rigide d'attelage 9 et l'extrémité avant 5 de la remorque 1.

La figure 7 est une représentation agrandie en vue de profil de l'ensemble d'articulation d'attelage 3 de la figure 6. La pièce d'attelage tracteur 6 comprend notamment l'articulation trois axes 7 et une plaque rigide arrière 12. Cette dernière est pourvue de perçages destinés à être traversés par des boulons de fixation 13 permettant de solidariser ladite plaque rigide arrière 12 à la plaque rigide d'attelage 9, laquelle est solidaire de l'extrémité avant 5. La plaque rigide arrière 12 et la plaque rigide attelage 9 permettent ainsi de matérialiser le point d'attelage 8 distant de l'articulation trois axes 7.

Les opérations d'attelage et de dételage sont ainsi effectuées de préférence en atelier de maintenance au niveau de la plaque rigide arrière 12 et de la plaque rigide d'attelage 9.

La plaque rigide arrière 12 se prolonge vers l'extrémité avant de la pièce d'attelage tracteur 6 par l'intermédiaire d'une partie de liaison 12a et se termine par un embout d'articulation 14. Ce dernier est avantageusement constitué de deux portions de sphères 14a, 14b présentant respectivement une face sphérique est dirigée vers le haut et vers le bas. L'embout d'articulation 14 constitue ainsi une partie de l'articulation trois axes 7.

La pièce d'attelage tracteur 6 comprend également une plaque rigide avant 15 pourvues de perçage 16 destinés à être traversés par des boulons de fixation 17 pour solidariser ladite plaque rigide avant 15 à l'extrémité du châssis 2a du véhicule tracteur 2.

La pièce d'attelage tracteur 6 comprend également un réceptacle à empreinte 18 solidaire mécaniquement de la plaque rigide avant 15. L'embout d'articulation 14 est destiné à être logé dans le réceptacle à empreinte 18 de manière à réaliser une liaison mécanique articulée.

Le réceptacle à empreinte 18 comprend avantageusement deux calottes préférentiellement sphériques 19 et concaves, agencées en vis-à-vis et venant enserrer l'embout d'articulation 14 tout en autorisant des mouvements de rotation mutuelle selon trois axes.

Le système d'amortissement comprend avantageusement une coupelle composite 20 en matériau de frottement, disposée à l'interface de chaque calotte 19 et de la portion de sphère correspondante 14a ou 14b.

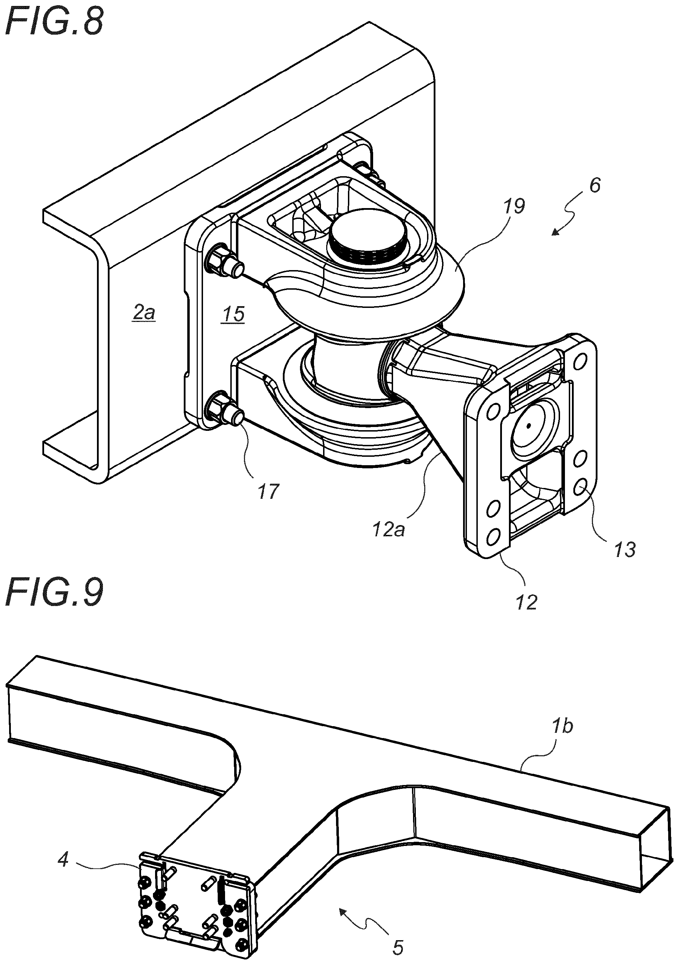

La figure 8 est une autre représentation en perspective d'un exemple de réalisation de la pièce d'attelage tracteur 6 de l'ensemble d'articulation d'attelage 3.

La figure 9 est une représentation perspective d'une pièce d'attelage remorque 4 de l'ensemble d'articulation attelage 3, fixée sur l'extrémité avant 5. Cette dernière est avantageusement constituée par un prolongement avant d'un châssis 1b de la remorque 1.

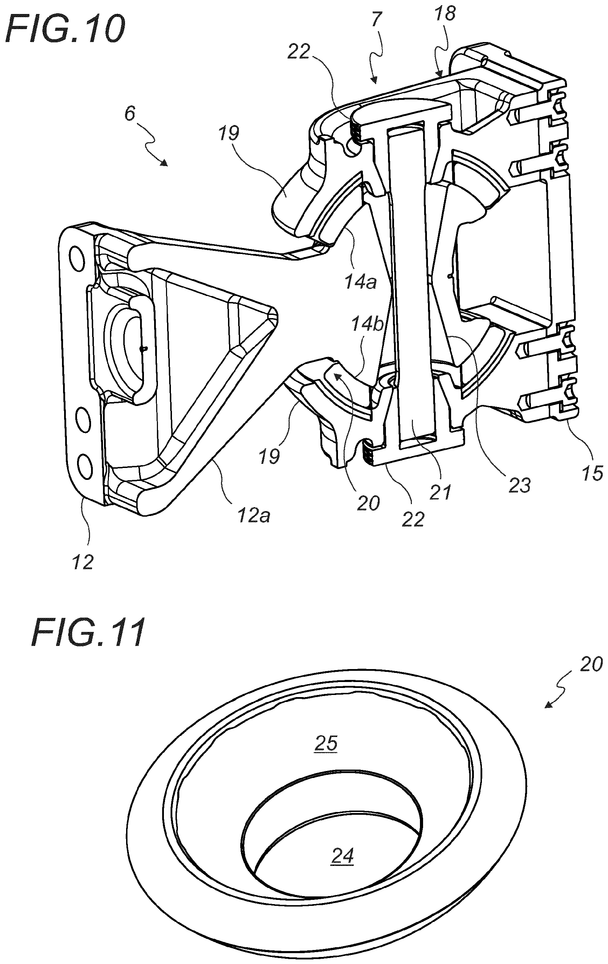

La figure 10 est une représentation en perspective et en coupe de la pièce d'attelage tracteur 6 d'un exemple de réalisation de l'ensemble d'articulation d'attelage 3. Les calottes sphériques 19, les coupelles composites 20 ainsi que l'embout d'articulation 14 sont avantageusement traversées par un arbre de tension 21 reliant les calottes sphériques 19 entre elles.

Des écrous de précontrainte 22 sont prévus à chaque extrémité de l'arbre de tension 21 et vissés sur ce dernier. Les écrous de précontrainte 22 prennent appui sur les calottes sphériques 19 de manière à maintenir ces dernières en rapprochement et à exercer une précontrainte sur les coupelles composites 20, lesquelles sont en appui sur l'embout d'articulation 14 et plus précisément sur les potions de sphère 14a et 14b. On obtient ainsi une précontrainte verticale pour compenser une usure des matériaux de frottement.

Les coupelles composites 20 présentent avantageusement une ouverture centrale 24 pour permettre le montage de l'arbre de tension 21, lequel traverse lesdites coupelles composites 20 et les calottes sphériques 19.

L'embout d'articulation 14 présente avantageusement un passage 23 destiné à être traversé par l'arbre de tension 21. Ce passage 23 présent une forme tronconique dont le diamètre s'agrandit en partant de son centre en direction de sa face délimitant la portion sphérique haute 14a et en direction de sa face délimitant la portion sphérique basse 14b. Cette forme doublement tronconique et symétrique par rapport à un plan de symétrie, permet ainsi d'assurer une articulation selon trois axes entre l'embout d'articulation 14 et le réceptacle d'empreinte 18.

La figure 11 illustre selon une vue en perspective, un exemple de réalisation d'une coupelle composite 20 constituant une partie du système d'amortissement de l'ensemble d'articulation d'attelage 3. Cette coupelle composite 20 présente ainsi une face d'appui concave 25, de préférence sphérique, destinée à venir en contact et en appui avec une portion de sphère 14a ou 14b de l'embout d'articulation 14.

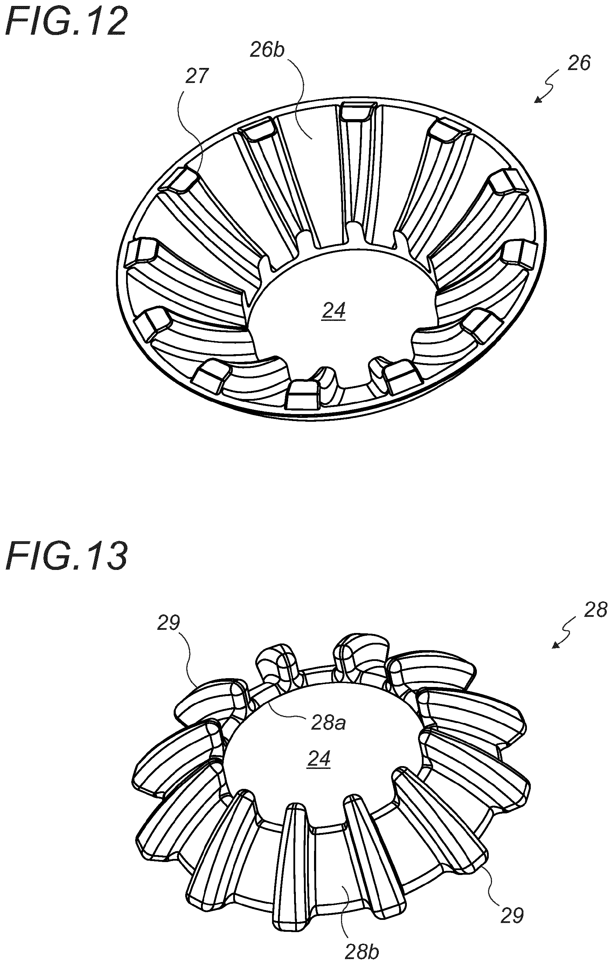

Les figures 12 et 13 illustrent respectivement des détails de réalisation d'une partie du système d'amortissement de l'ensemble articulation d'attelage 3, à savoir la coupelle composite 20. Chaque coupelle composite 20 est un assemblage comprenant un insert extérieur 26 dont une face extérieure 26a épouse la forme intérieure de la calotte 19 et dont une face intérieure 26b, de forme sensiblement concave, présente des ailettes radiales 27 en relief. Ces ailettes radiales 27 sont réparties avantageusement sur toute la face intérieure 26b.

L'assemblage constituant la coupelle composite 20 comprend également un insert intérieur 28 dont une face extérieure 28a épouse la forme de la portion sphérique 14a ou 14b et dont une face interne 28b, de forme sensiblement convexe, présente des ailettes radiales 29 en relief. Ces ailettes radiales 29 sont réparties avantageusement sur toute la face intérieure 28b.

Les inserts extérieur 26 et intérieur 28 sont réalisés par exemple avec un matériau de frottement du genre matériau plastique de frottement, composite de frottement, alliage métallique de frottement, matériau fritté de frottement, polyamide, thermoplastique, polyéthylène chargé ou non, de préférence avec un coefficient de frottement relativement élevé, par exemple de l'ordre de 0,3, constant et ne dépendant ni des vitesses, ni des conditions environnementales.

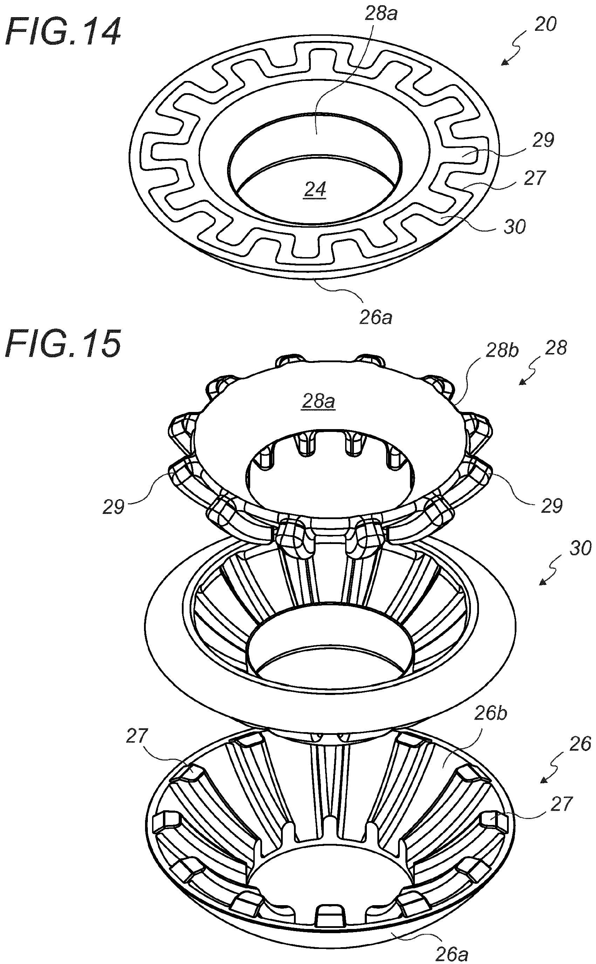

La figure 14 illustre selon une vue en coupe, un exemple de réalisation de la coupelle composite 20 et la figure 15 illustre selon une vue en éclaté les éléments constitutifs de ladite coupelle composite 20.

Les inserts extérieur 26 et intérieur 28 sont assemblés selon leur axe de révolution R en quinconce au niveau de leurs ailettes radiales respectives 27 et 29. Les espaces localisés entre les ailettes radiales respectives 27 et 29 sont remplis avec un matériau d'amortissement par exemple un élastomère 30. Ce dernier présent une forme illustrée notamment à la figure 15 et obtenue après une opération de moulage lorsque les inserts extérieur 26 et intérieur 28 sont assemblés.

Cette technique de surmoulage est connue en tant que telle et ne sera donc pas décrite davantage. A titre d'exemple, on pourra se reporter à la réalisation d'un « silent bloc » ou d'une articulation élastique caoutchouc - métal ou encore d'un isolateur sismique en élastomère. On pourra se reporter notamment aux documents WO 2014/104995 ou EP 2 039 958.

Dans de tels objets, l'élastomère, soumis à une compression, est contraint en faible expansion par son adhésion sur les couches en matériau rigide. L'empilage circulaire des ailettes radiales 27 et 29 correspond ainsi à l'empilage des tôles d'un isolateur sismique par exemple. En lacet, l'élastomère compris entre les dents est en compression sous faible expansion du fait de son adhésion aux dents. La raideur est donc importante.

En revanche en roulis cet élastomère est soumis au cisaillement à l'instar d'un déplacement latéral d'un isolateur sismique.

La figure 14 illustre selon une vue en coupe un exemple de réalisation d'une coupelle composite 20 avec les espaces libres entre les inserts extérieur 26 et intérieur 28 comblés avec l'élastomère 30.

La précontrainte à laquelle sont soumises les coupelles composites 20 soumet l'élastomère 30 à un cisaillement, générant une raideur faible pouvant compenser l'usure des coupelles composites 20 de l'ordre du millimètre par exemple, d'où une perte de charge faible.

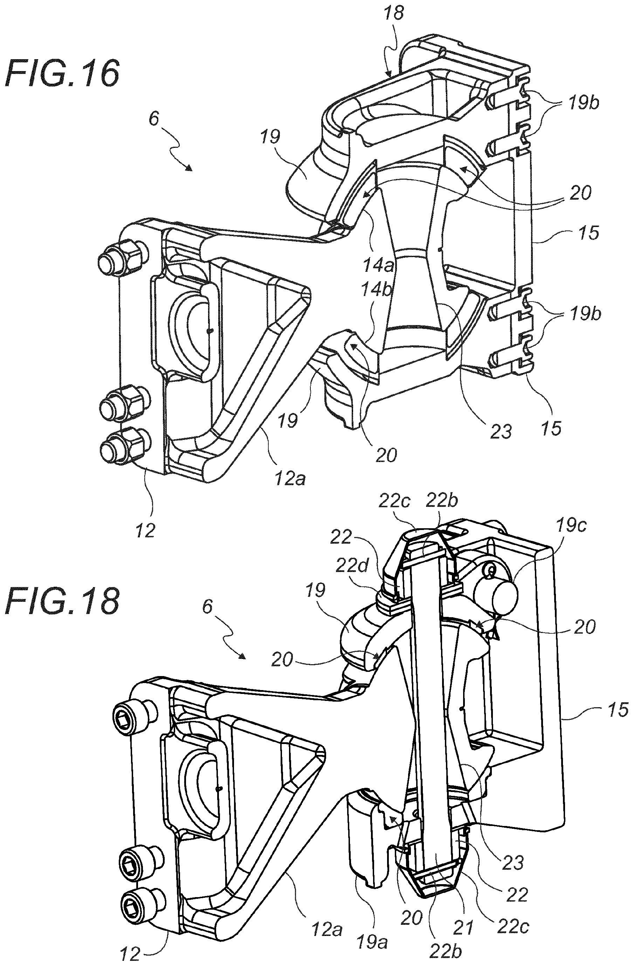

La figure 16 illustre selon une vue en coupe et en perspective, un autre mode de réalisation de la pièce d'attelage tracteur 6. Dans ce mode de réalisation, la pièce d'attelage tracteur 6 ne comporte pas d'arbre de tension 21 reliant les calottes sphériques 19 entreelles. Ces dernières sont associées à des coupelles composites 20 et sont précontraintes sur l'embout d'articulation 14, plus précisément sur les portions de sphères haute 14a et basse 14b par montage. Les calottes sphériques 19 sont vissées sur la plaque rigide avant 15 par l'intermédiaire de vis de montage 19b traversant ladite plaque rigide avant 15.

La précontrainte est obtenue de manière simple et efficace. En effet, on fixe par exemple la calotte sphérique basse 19 sur la plaque rigide avant 15 grâce à des vis de montage 19b. On équipe en suite la calotte sphérique basse 19 avec une coupelle composite 20 et on dispose l'embout d'articulation 14 sur ladite coupelle composite 20. On dispose ensuite la calotte sphérique haute 19, équipée de sa coupelle composite 20, sur le haut de l'embout d'articulation 14. Grâce à une presse, on contraint les coupelles composites 20 sur l'embout d'articulation 14 de manière à pouvoir fixer la calotte sphérique haute 19 sur la plaque rigide avant 15 avec des vis de montage 19b.

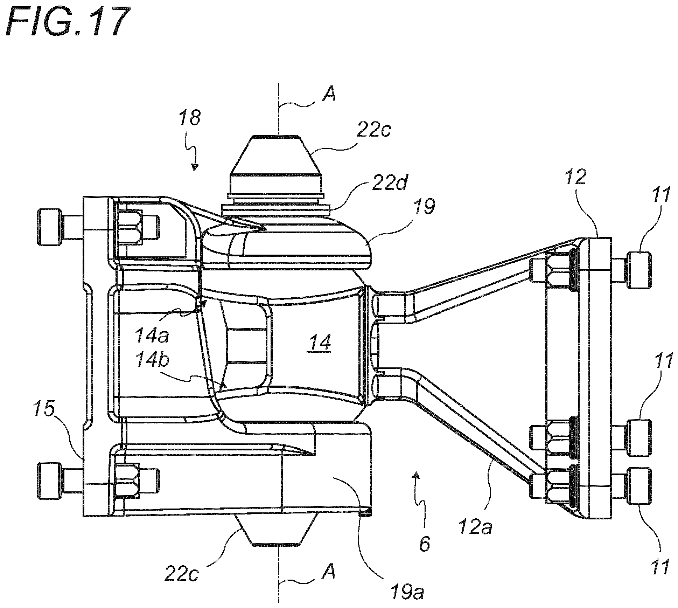

La figure 17 illustre selon une vue de profil, encore un autre mode de réalisation de la pièce d'attelage tracteur 6 dans lequel la calotte sphérique basse 19 est remplacée par un support à empreinte 19a. Ce dernier est avantageusement réalisé d'une seule pièce avec la plaque rigide avant 15. Le support à empreinte 19a est également pourvu d'au moins une coupelle composite 20 venant en appui sur la portion sphérique basse 14b. La calotte sphérique haute 19 est associée à des rondelles de précontrainte 22d du genre rondelles Belleville.

La figure 18 est une vue en coupe et en perspective de la pièce d'attelage tracteur 6 de la figure 17. L'arbre de tension 21 traverse l'embout d'articulation 14, la calotte sphérique haute 19 et le support à empreinte 19a. Les écrous de précontrainte 22 vissés sur chaque extrémité de l'arbre de tension 21 sont maintenus dans une position de précontrainte optimale grâce à une goupille 21 traversant l'arbre de tension 21 à chacune de ses extrémités. La calotte sphérique haute 19 est avantageusement montée pivotante sur la plaque rigide avant 15 via un axe de pivotement 19c. Une tel montage permet de rabattre la calotte sphérique haute 19 sur la portion de sphère haute 14a une fois que l'embout d'articulation 14 est disposé dans le support d'empreinte 19a.

Le support d'empreinte 19a est pièce avantageusement plus grande que la calotte sphérique haute 19, car il est soumis à un report de charge verticale de la remorque 1.

Les rondelles de précontrainte 22d enserrées entre l'écrou de précontrainte 22 et la face supérieure de la clotte sphérique haute 19, permettent d'obtenir une force d'appui constante sur l'embout d'articulation 14 et ce quel que soit l'usure éventuelle des pièces en contact mutuel. En fonction de l'intensité de précontrainte souhaitée, c'est-à-dire suffisante pour assurer un amortissement en lacet efficace, il est possible d'optimiser, voire d'augmenter, les dimensions des coupelles composites 20, notamment celle associée à la calotte sphérique haute 19.

Selon un autre exemple de réalisation, il est possible d'associer des rondelles de précontraintes 22d à la calotte sphérique basse 19 ou au support d'empreinte 19a.

Selon un autre exemple de réalisation il est possible d'associer à la fois des rondelles de précontrainte 22d à la calotte sphérique haute 19 et à la calotte sphérique basse 19 ou au support d'empreinte 19a.

Les extrémités apparentes de l'arbre de tension 21 sont avantageusement recouvertes chacune d'un cache de protection 22c recouvrant les portions de filetage, l'écrou de précontrainte 22 et la goupille 22b.

Selon un autre exemple de réalisation, l'arbre de tension 21 est réalisé avec un matériau et/ou structure particulière(s) de manière à présenter une élasticité suffisante. Il est alors possible de supprimer les rondelles de précontraintes 22d.

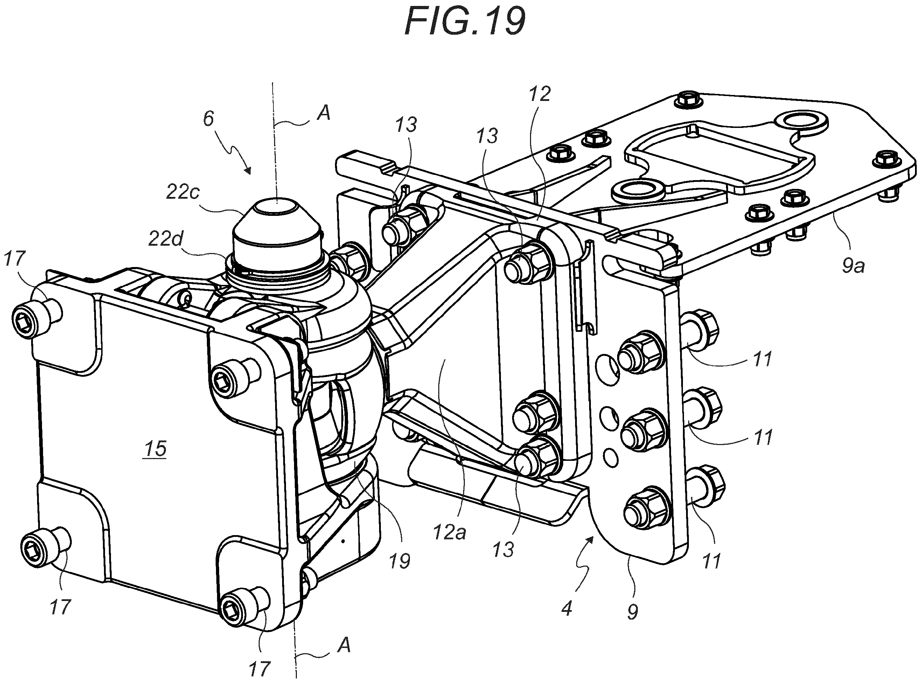

La figure 19 est une vue en perspective de la pièce d'attelage tracteur 6 des figures 17 et 18, fixée sur un exemple de réalisation d'une pièce d'attelage remorque 4. Dans cet exemple de réalisation, la pièce d'attelage remorque 4 comporte la plaque rigide d'attelage 9 pourvue de perçages 10 destinés à être traversé par des boulons de fixation 11 pour solidariser ladite plaque rigide d'attelage 9 et l'extrémité avant 5 de la remorque 1. La plaque rigide d'attelage 9 pourvue avantageusement d'une plaque complémentaire 9a s'étendant orthogonalement par rapport à la plaque rigide d'attelage 9 et destinée à être fixée, par exemple par boulonnage sur une face supérieure du timon 5. La plaque rigide d'attelage 9 et la plaque complémentaire sont par exemple réalisées d'une seule pièce ou mécanosoudées.

On obtient ainsi un système d'amortissement qui permet une usure des pièces en frottement sans toutefois perdre en efficacité et ce grâce à son élasticité axiale, selon l'axe vertical, et à sa raideur en lacet.

De manière évidente, l'invention ne se limite pas au mode de réalisation préférentiel décrit précédemment et représenté sur les différentes figures, l'homme du métier pouvant y apporter de nombreuses modifications et imaginer d'autres variantes. Ainsi, une caractéristique technique décrite peut être remplacée par une caractéristique technique équivalente sans sortir ni de la portée, ni du cadre de l'invention définis par les revendications.

## Revendications

1. Ensemble d'articulation d'attelage (3) pour un ensemble routier comprenant un véhicule tracteur (2) et au moins une remorque (1) attelée au dit véhicule tracteur (2), une articulation mécanique, autorisant des rotations selon au moins un axe vertical (A), entre une extrémité avant (5) de la remorque (1) et le véhicule tracteur (2) et un système d'amortissement pour amortir au moins les mouvements en lacet de la remorque (1), ledit ensemble d'articulation d'attelage (3) comportant une pièce d'attelage remorque (4) destinée à être fixée à l'extrémité avant (5), une pièce d'attelage tracteur (6) destinée à être fixée à un châssis (2a) du véhicule tracteur (2), ladite pièce d'attelage tracteur (6) comportant l'articulation mécanique et le système d'amortissement, l'articulation mécanique comportant
un réceptacle à empreinte dans lequel est logé et retenu l'embout d'articulation (14) de manière à réaliser un liaison mécanique articulée au moins autour d'un axe vertical (A), ladite articulation mécanique intégrant le système d'amortissement, et **caractérisé en ce que** le
réceptacle à empreinte comprend deux calottes (19) concaves agencées en vis-à-vis et venant enserrer l'embout d'articulation (14) tout en autorisant des mouvements de rotation mutuels selon au moins un axe vertical (A) pour exercer une précontrainte sur ledit embout d'articulation.

2. Ensemble d'articulation d'attelage (3) selon la revendication 1, **caractérisé en ce que** le système d'amortissement comprend une coupelle composite (20) en matériau de frottement disposée à l'interface de chaque calotte (19) et de l'embout d'articulation (14).

3. Ensemble d'articulation d'attelage (3) selon la revendication 2, **caractérisé en ce que** les calottes (19), les coupelles composites (20) et l'embout d'articulation (14), sont traversés par un arbre de tension (21) reliant les calottes sphériques (19) pour maintenir les calottes (19) en rapprochement et exercer une précontrainte sur les coupelles composites (20) en appui sur l'embout d'articulation (14).

4. Ensemble d'articulation selon la revendication 3, **caractérisé en ce que** l'arbre de tension (21) prend appui sur au moins une des calottes (19) par l'intermédiaire de rondelles de compression (21a) du genre rondelles Belleville.

5. Ensemble d'articulation d'attelage (3) selon l'une quelconque des revendications 2 à 4, **caractérisé en ce que** chaque coupelle composite (20) comprend un insert extérieur (26) dont une face extérieure (26a) épouse la forme interne de la calotte (19) et dont une face intérieure (26b) de forme sensiblement concave présente des ailettes radiales en relief, et un insert intérieur (28) dont une face extérieure (28a) épouse la forme de l'embout d'articulation (14) et dont une face intérieure (28b) de forme sensiblement convexe présente des ailettes radiales (29) en relief et en vis-à-vis des ailettes radiales (27) de l'insert extérieur (26).

6. Ensemble d'articulation d'attelage (3) selon l'une quelconque des revendications 1 à 5, **caractérisé en ce que** les calottes (19) concaves et l'embout d'articulation (14) présentent au moins partiellement une forme sphérique constituant ainsi une articulation à trois axes (7).

7. Ensemble d'articulation d'attelage (3) selon la revendication 5 ou 6, **caractérisé en ce que** les inserts extérieur (26) et intérieur (28) sont assemblés, selon leur axe de révolution R, en quinconce au niveau de leurs ailettes radiales (27, 29) et les espaces localisés entre les ailettes radiales (27, 29) sont comblés avec un élastomère (30).

8. Ensemble d'articulation d'attelage (3) selon l'une quelconque des revendications 5 à 7, **caractérisé en ce que** les inserts extérieur (26) et intérieur (28) sont réalisés avec un matériau de frottement d'une famille comprenant un matériau polyamide, un matériau thermoplastique, un matériau polyéthylène, chargé ou non chargé, un matériau plastique de frottement, un matériau composite de frottement, un alliage métallique de frottement et un matériau fritté de frottement.

9. Ensemble d'articulation d'attelage (3) selon la revendication 7, **caractérisé en ce que** l'élastomère (30) est contraint en compression sur l'embout d'articulation (14) lors d'un mouvement en lacet.

10. Ensemble d'articulation selon l'une quelconque des revendications 1 à 9, **caractérisé en ce que** l'articulation mécanique est indémontable ou inséparable à des fins de détalage de la remorque (1), un point d'attelage (8) formé par l'interface de la pièce d'attelage remorque (4) et de la pièce d'attelage tracteur (6) étant décalé de l'articulation mécanique, en direction de la remorque (1).

11. Ensemble d'articulation d'attelage (3) selon l'une quelconque des revendications 1 à 10, **caractérisé en ce que** la pièce d'attelage remorque (4) est une plaque rigide d'attelage (9) pourvue de perçages (10) destinés à être traversés par des boulons de fixation (11) pour solidariser ladite plaque rigide d'attelage (9) à l'extrémité avant (5).

12. Ensemble d'articulation d'attelage (3) selon la revendication 11, caractérisé en ce la pièce d'attelage tracteur (6) comporte une plaque rigide arrière (12) pourvue de perçages destinés à être traversés par des boulons de fixation (13) pour solidariser ladite plaque rigide arrière (12) à la plaque rigide d'attelage (9) de la remorque (1) et constituer ainsi le point d'attelage (8) distant de l'articulation trois axes (7).

13. Ensemble d'articulation d'attelage (3) selon la revendication 12, **caractérisé en ce que** la pièce rigide arrière (12) se prolonge par l'intermédiaire d'une partie de liaison (12a) avec un embout d'articulation (14) pour constituer une partie de l'articulation trois axes (7).

14. Ensemble d'articulation d'attelage (3) selon l'une quelconque des revendications 1 à 13, **caractérisé en ce que** la pièce d'attelage tracteur (6) comporte une plaque rigide avant (15) pourvue de perçages (16) destinés à être traversés par des boulons de fixation (17) pour solidariser ladite plaque rigide avant (15) au châssis (2a) du véhicule tracteur (2).

15. Ensemble routier comprenant un véhicule tracteur (2) et au moins une remorque (1) attelée au véhicule tracteur (2) par l'intermédiaire d'un ensemble d'articulation d'attelage (3) conforme à l'une quelconque des revendications 1 à 14.

## Patentansprüche

1. Sattelkupplungs- Gelenkverbindung (3) für eine Fahrzeugkombination mit einer Zugmaschine (2) und mindestens einem Anhänger (1), der an diese Zugmaschine (2) angehängt ist, einer mechanischen Gelenkverbindung, die Drehungen entsprechend mindestens einer senkrechte Achse (A), zwischen einem vorderen Ende (5) des Anhängers (1) und der Zugmaschine (2) ermöglicht und einem Dämpfersystem, um zumindest die Gierbewegungen des Anhängers (1) abzuschwächen, diese Sattelkupplungs- Gelenkverbindung (3) enthält ein Anhängerkupplungselement (4) zur Befestigung am vorderen Ende (5), ein Zugmaschinenkupplungselement (6), bestimmt zur Befestigung an einem Rahmen (2a) der Zugmaschine (2), dieses Zugmaschinenkupplungselement (6) enthält die mechanische Gelenkverbindung sowie das Dämpfersystem, die mechanische Gelenkverbindung enthält dabei ein Aufnahmefach, in dem der Kupplungsstutzen (14) so untergebracht und fixiert ist, dass eine mechanische Gelenkverbindung mindestens um eine senkrechte Achse (A) ausgeführt werden kann, diese mechanisch Gelenkverbindung enthält dabei das Dämpfersystem, und
**dadurch gekennzeichnet, dass** das Aufnahmefach zwei konkave Kappen (19) enthält, einander gegenüberliegend angeordnet, die den Kupplungsstutzen (14) umschließen, dabei jedoch wechselseitige Drehbewegungen um mindestens eine senkrechte Achse (A) ermöglichen, um auf diesen Kupplungsstutzen eine Vorspannung auszuüben.

2. Sattelkupplungs- Gelenkverbindung (3) nach Anspruch 1, **dadurch gekennzeichnet, dass** das Dämpfersystem einen Verbundwerkstoff- Federteller (20) aus Reibungsmaterial enthält, angeordnet an der Schnittstelle jeder Kappe (19) mit dem Kupplungsstutzen (14).

3. Sattelkupplungs- Gelenkverbindung (3) nach Anspruch 2, **dadurch gekennzeichnet, dass** durch die Kappen (19), die Verbundwerkstoff- Federteller (20) und den Kupplungsstutzen (14) eine Spannwelle (21) hindurchführt, die die sphärischen Kappen (19) verbindet, damit diese Kappen (19) nahe bei einander bleiben und um eine Vorspannung auf den Verbundwerkstoff- Federteller (20), der sich auf den Kupplungsstutzen (14) stützt, auszuüben.

4. Sattelkupplungs- Gelenkverbindung nach Anspruch 3, **dadurch gekennzeichnet, dass** die Spannwelle (21) sich über Kompressionsscheiben (21a) vom Typ Belleville- Unterlegscheiben auf mindestens eine der Kappen (19) stützt.

5. Sattelkupplungs- Gelenkverbindung (3) nach einem beliebigen der Ansprüche 2 bis 4, **dadurch gekennzeichnet, dass** jeder Verbundwerkstoff- Federteller (20) einen Außeneinsatz (26) umfasst, bei dem die Außenseite (26a) die Form der Innenseite der Kappe (19) hat und bei dem eine Innenseite (26b) mit einer im Wesentlichen konkaven Form radiale, reliefförmige Rippen aufweist, und einen Inneneinsatz (28), bei dem eine Außenseite (28a) die Form des Kupplungsstutzens (14) hat und bei dem eine Innenseite (28b) mit einer im Wesentlichen konvexen Form radiale, reliefförmige Rippen (29) aufweist, angeordnet gegenüber den radialen Rippen (27) des Außeneinsatzes (26).

6. Sattelkupplungs- Gelenkverbindung (3) nach einem beliebigen der Ansprüche 1 bis 5, **dadurch gekennzeichnet, dass** die konkaven Kappen (19) und der Kupplungsstutzen (14) zumindest teilweise eine sphärische Form aufweisen und so ein Gelenk mit drei Achsen (7) bilden.

7. Sattelkupplungs- Gelenkverbindung (3) nach Anspruch 5 oder 6, **dadurch gekennzeichnet, dass** die Außen- (26) und Inneneinsätze (28) entsprechend ihrer Drehachse R in Höhe ihrer radialen Rippen (27, 29) versetzt verbunden sind und die zwischen den radialen Rippen (27, 29) befindlichen Räume mit einem Elastomer (30) gefüllt sind.

8. Sattelkupplungs- Gelenkverbindung (3) nach einem beliebigen der Ansprüche 5 bis 7, **dadurch gekennzeichnet, dass** die Außen- (26) und Inneneinsätze (28) aus einem Reibungsmaterial bestehen, das zu einer Materialfamilie gehört, die ein Polyamid, ein thermoplastisches Material, ein Polyethylen, gefüllt oder nicht gefüllt, ein Kunststoff- Reibungsmaterial, ein Verbundstoff- Reibungsmaterial, eine Reibungs- Metalllegierung und ein gesintertes Reibungsmaterial enthält.

9. Sattelkupplungs- Gelenkverbindung (3) nach Anspruch 7, **dadurch gekennzeichnet, dass** das Elastomer (30) auf dem Kupplungsstutzen (14) bei einer Gierbewegung zusammengepresst wird.

10. Sattelkupplungs- Gelenkverbindung nach einem beliebigen der Ansprüche 1 bis 9, **dadurch gekennzeichnet, dass** die mechanische Gelenkverbindung nicht demontierbar oder nicht trennbar ist zum Abhängen des Anhängers (1), da ein Anhängepunkt (8), gebildet aus der Schnittstelle des Anhängerkupplungselementes (4) und des Zugmaschinenkupplungselementes (6), gegenüber der mechanischen Gelenkverbindung, in Richtung des Anhängers (1) versetzt ist.

11. Sattelkupplungs- Gelenkverbindung (3) nach einem beliebigen der Ansprüche 1 bis 10, **dadurch gekennzeichnet, dass** das Anhängerkupplungselement (4) eine starre Kupplungsplatte (9) ist, versehen mit Bohrungen (10), zur Durchführung von Befestigungsbolzen (11) um diese starre Kupplungsplatte (9) mit dem vorderen Ende (5) fest zu verbinden.

12. Sattelkupplungs- Gelenkverbindung (3) nach Anspruch 11, **dadurch gekennzeichnet, dass** das Zugmaschinenkupplungselement (6) eine starre Platte hinten (12) umfasst, versehen mit Bohrungen zur Durchführung von Befestigungsbolzen (13) um diese starre Platte hinten (12) mit der starren Kupplungsplatte (9) des Anhängers (1) fest zu verbinden und so den entfernten Kupplungspunkt (8) der dreiachsigen Gelenkkupplung (7) zu bilden.

13. Sattelkupplungs- Gelenkverbindung (3) nach Anspruch 12, **dadurch gekennzeichnet, dass** das starre, hintere Element (12) sich über ein Verbindungsteil (12a) mit einem Kupplungsstutzen (14) verlängert, um einen Teil der dreiachsigen Gelenkkupplung (7) zu bilden.

14. Sattelkupplungs- Gelenkverbindung (3) nach einem beliebigen der Ansprüche 1 bis 13, **dadurch gekennzeichnet, dass** das Zugmaschinenkupplungselement (6) eine starre Kupplungsplatte vorne (15) enthält, versehen mit Bohrungen (16), zur Durchführung von Befestigungsbolzen (17) um diese starre Kupplungsplatte vorne (15) mit dem Rahmen (2a) der Zugmaschine (2) zu verbinden.

15. Fahrzeugkombination mit einer Zugmaschine (2) und mindestens einem Anhänger (1), angehängt an die Zugmaschine (2) über eine Sattelkupplungs-Gelenkverbindung (3) entsprechend einem beliebigen der Ansprüche 1 bis 14.

## Claims

1. Coupling articulation assembly (3) for a road assembly comprising a towing vehicle (2) and at least one trailer (1) coupled to said towing vehicle (2), a mechanical articulation, enabling rotations about at least one vertical axis (A), between a front end (5) of the trailer (1) and the towing vehicle (2) and a damping system for damping at least the yaw movements of the trailer (1), said coupling articulation assembly (3) comprising a trailer coupling part (4) intended to be fixed to the front end (5), a towing coupling part (6) intended to be fixed to a chassis (2a) of the towing vehicle (2), said towing coupling part (6) comprising the mechanical articulation and the damping system, the mechanical articulation comprising a recessed receptacle in which is housed and retained the articulation end-piece (14) so as to provide a mechanical connection articulated about at least one vertical axis (A), said mechanical articulation integrating the damping system, and
**characterised in that** the recessed receptacle comprises two concave caps (19) arranged facing each other and surrounding the articulation endpiece (14) while enabling mutual rotational movements about at least one vertical axis (A) to exert a prestress on said articulation endpiece.

2. Coupling articulation assembly (3) according to claim 1, **characterised in that** the damping system comprises a composite cup (20) made of friction material disposed at the interface of each cap (19) and the articulation end-piece (14).

3. Coupling articulation assembly (3) according to claim 2, **characterised in that** the caps (19), the composite cups (20) and the articulation end-piece (14) are passed through by a tensioning shaft (21) connecting the spherical caps (19) in order to hold the caps (19) together and exert a prestress on the composite cups (20) bearing on the articulation end-piece (14).

4. Articulation assembly according to claim 3, **characterised in that** the tensioning shaft (21) bears on at least one of the caps (19) by way of compression washers (21a) of the Belleville washer type.

5. Coupling articulation assembly (3) according to any one of claims 2 to 4, **characterised in that** each composite cup (20) comprises an outer insert (26), an outer face (26a) of which takes the inner shape of the cap (19) and an inner face (26b) of substantially concave shape of which has radial fins in relief, and an inner insert (28), an outer face (28a) of which takes the shape of the articulation end-piece (14) and an inner face (28b) of substantially convex shape of which has radial fins (29) in relief and facing the radial fins (27) of the outer insert (26).

6. Coupling articulation assembly (3) according to any one of claims 1 to 5, **characterised in that** the concave caps (19) and the articulation end-piece (14) have, at least partially, a spherical shape thus constituting a three-axis articulation (7).

7. Coupling articulation assembly (3) according to claim 5 or 6, **characterised in that** the outer (26) and inner (28) inserts are assembled, about their axis of revolution R, in a staggered manner at their radial fins (27, 29) and the spaces located between the radial fins (27, 29) are filled with an elastomer (30).

8. Coupling articulation assembly (3) according to any one of claims 5 to 7, **characterised in that** the outer (26) and inner (28) inserts are made of a friction material of a family comprising a polyamide material, a thermoplastic material, a filled or unfilled polyethylene material, a friction plastic material, a friction composite material, a friction metal alloy and a friction sintered material.

9. Coupling articulation assembly (3) according to claim 7, **characterised in that** the elastomer (30) is urged into compression on the articulation end-piece (14) during a yaw movement.

10. Articulation assembly according to any one of claims 1 to 9, **characterised in that** the mechanical articulation is non-removable or inseparable for the purpose of disengaging the trailer (1), a coupling point (8) formed by the interface of the trailer coupling part (4) and the towing coupling part (6) being offset from the mechanical articulation, in the direction of the trailer (1).

11. Coupling articulation assembly (3) according to any one of claims 1 to 10, **characterised in that** the trailer coupling part (4) is a rigid coupling plate (9) provided with holes (10) intended to be passed through by fastening bolts (11) for securing said rigid coupling plate (9) to the front end (5).

12. Coupling articulation assembly (3) according to claim 11, **characterised in that** the towing coupling part (6) comprises a rear rigid plate (12) provided with holes intended to be passed through by fastening bolts (13) for securing said rear rigid plate (12) to the rigid coupling plate (9) of the trailer (1) and thus constituting the coupling point (8), remote from the three-axis articulation (7).

13. Coupling articulation assembly (3) according to claim 12, **characterised in that** the rear rigid part (12) is extended by way of a connecting part (12a) with an articulation end-piece (14) in order to constitute a part of the three-axis articulation (7).

14. Coupling articulation assembly (3) according to any one of claims 1 to 13, **characterised in that** the towing coupling part (6) comprises a rigid front plate (15) provided with holes (16) intended to be passed through by fastening bolts (17) for securing said rigid front plate (15) to the chassis (2a) of the towing vehicle (2).

15. Road assembly comprising a towing vehicle (2) and at least one trailer (1) coupled to the towing vehicle (2) by way of a coupling articulation assembly (3) according to any one of claims 1 to 14.
